# EUROPÄISCHE PATENTSCHRIFT

(11) **EP 2 889 129 B1**
(45) Veröffentlichungstag und Bekanntmachung des Hinweises auf die Patenterteilung: **24.04.2019**
(21) Anmeldenummer: 14193623.7
(22) Anmeldetag: 18.11.2014
(51) Int. Cl.: B30B 11/00, B30B 11/02, B30B 15/04, B29C 43/02, B29L 31/00

(54) **Presse**
Press
Presse

(30) Priorität: 06.12.2013 DE 102013113665
(43) Veröffentlichungstag der Anmeldung: 01.07.2015
(73) Patentinhaber: Fette Compacting GmbH, 21493 Schwarzenbek (DE)
(72) Erfinder: Pannewitz, Thomas, 21514 Klein Pampau (DE)
(74) Vertreter: Hauck Patentanwaltspartnerschaft mbB

(56) Entgegenhaltungen:
- EP-B1- 1 849 590
- DE-A1-102011 116 552
- GB-A- 2 053 074
- JP-A- H0 557 497

## Beschreibung

Die Erfindung betrifft eine Presse zur Herstellung eines Presslings aus pulverförmigem Material, beispielsweise Metall- oder Keramikpulver. Das pulverförmige Material wird in eine Formaufnahme einer Matrizenplatte gefüllt und anschließend beispielsweise durch einen Oberstempel und einen Unterstempel in der Formaufnahme zu einem Pressling verpresst. Eine solche Presse mit den Merkmalen des Oberbegriffs des Anspruchs 1 ist beispielsweise bekannt aus DE 10 2011 116 552 A1. Es besteht ein Bedürfnis, die vertikale Position der Platten der Werkzeugführungseinheit, insbesondere der oberen bzw. unteren Stempelplatte und der Matrizenplatte, zu erfassen. Eine entsprechende Messeinrichtung ist für eine anders aufgebaute Presse aus EP 1 849 590 B1 bekannt. Dabei ist ein einziges Messlineal in seiner Längsmitte an einer als vertikale Führungssäule ausgebildeten Vertikalführung angebracht, wobei die vertikale Führungssäule an einer Seite der Führungssäule angeordnet ist. An den zu messenden Platten sind Messschlitten angeordnet, die zur Messung der vertikalen Position der Platten mit dem Messlineal zusammenwirken. Die das Messlineal haltende vertikale Führungssäule ist über eine Lagerplatte auf einem unteren Gehäuseteil des Pressengestells montiert. Dabei soll durch Zulassen einer begrenzten Relativbewegung zwischen der vertikalen Führungssäule und dem Pressengestell verhindert werden, dass thermische und durch Presskräfte bedingte Längenänderungen des Pressengestells Einfluss auf das Messergebnis nehmen. Im Betrieb kann es bei hohen Presskräften und den damit verbundenen Verformungen des Pressengestells allerdings zu einer Positionsverschiebung der Werkzeugführungseinheit einschließlich der vertikalen Führungssäule kommen. Diese Positionsverschiebung wird von dem Messlineal mitgemacht und muss in der Auswertung aufwendig erfasst und kompensiert werden. Außerdem können mit der bekannten Messeinrichtung nur vertikale Verschiebungen der Halteplatten, nicht jedoch aufgrund Verformungen der Halteplatten, insbesondere ein Verbiegen der Halteplatten, erfasst werden.

Ausgehend von dem erläuterten Stand der Technik liegt der Erfindung die Aufgabe zugrunde, eine Presse der eingangs genannten Art bereitzustellen, mit der auch bei hohen Presskräften zuverlässig die vertikale Position und eine etwaige Verformung der oberen und/oder unteren Stempelplatte und/oder der Matrizenplatte erfasst werden können.

Die Erfindung löst die Aufgabe durch den Gegenstand von Anspruch 1. Vorteilhafte Ausgestaltungen finden sich in den abhängigen Ansprüchen, der Beschreibung und den Figuren.

Die Erfindung löst die Aufgabe durch eine Presse zur Herstellung eines Presslings aus pulverförmigem Material, umfassend
- einen Pressenrahmen mit einer oberen und einer unteren Halteplatte, die durch mehrere vertikale Abstandhalter miteinander verbunden sind und mit mindestens einem zwischen der oberen und unteren Halteplatte angeordneten Tragrahmen,
- eine Werkzeugführungseinheit mit mindestens einer oberen Stempelplatte mit mindestens einem oberen Pressstempel und/oder mit mindestens einer unteren Stempelplatte mit mindestens einem unteren Pressstempel und mit einer Matrizenplatte mit mindestens einer Aufnahme für durch den oberen und/oder unteren Pressstempel zu verpressendes pulverförmiges Material,
- mindestens eine obere Antriebseinheit zum Verfahren der oberen Stempelplatte in vertikaler Richtung und/oder mindestens eine untere Antriebseinheit zum Verfahren der unteren Stempelplatte und/oder der Matrizenplatte in vertikaler Richtung,
- wobei die obere Antriebseinheit und/oder die untere Antriebseinheit sich im Betrieb derart an dem Tragrahmen abstützen, dass die Reaktionskräfte, die von den beim Verpressen des pulverförmigen Materials in der mindestens einen Aufnahme erzeugten Presskräften als Aktionskräften generiert werden, in den Tragrahmen eingeleitet werden,
- wobei der Tragrahmen die Matrizenplatte der Werkzeugführungseinheit zumindest abschnittsweise rahmenförmig umgibt und die Matrizenplatte an einander gegenüberliegenden Seiten des Tragrahmens befestigt ist,
- wobei ein Messlineal in seinem thermischen Nullpunkt und in einer Ebene zwischen den mit der Matrizenplatte befestigten gegenüberliegenden Seiten des Tragrahmens an dem Tragrahmen befestigt ist, und
- wobei an der oberen Stempelplatte und/oder an der unteren Stempelplatte und an der Matrizenplatte jeweils ein Messschlitten angeordnet ist, wobei die Messschlitten derart mit dem Messlineal zusammenwirken, dass ein vertikales Bewegen und ein Verbiegen der oberen Stempelplatte und/oder der unteren Stempelplatte und/oder der Matrizenplatte gemessen werden kann.

Die erfindungsgemäße Presse besitzt einen Pressenrahmen mit einer oberen und unteren Halteplatte, die durch vertikale Abstandhalter verbunden sind und so einen Rahmen bzw. ein Gehäuse der Presse bilden. Über die untere Halteplatte steht die Presse über Füße oder direkt auf dem Untergrund auf. Die Presse umfasst weiterhin eine Werkzeugführungseinheit, insbesondere ein Werkzeugsführungsgestell. Diese besitzt eine oder mehrere obere und/oder untere Stempelplatte(n) mit jeweils mindestens einem Ober- und/oder Unterstempel. Darüber hinaus besitzt die Werkzeugführungseinheit eine Matrizenplatte mit einer Formaufnahme, in die zu verpressendes Pulver gefüllt wird. Bei dem pulverförmigen Material kann es sich beispielsweise um Metall- oder Keramikpulver handeln. Häufig umfasst die Presse mindestens einen Ober- und Unterstempel, die in der Aufnahme der Matrizenplatte zum Verpressen des eingefüllten Pulvers zusammenwirken. Es ist jedoch grundsätzlich auch denkbar, eine Verpressung beispielsweise nur von oben mit nur einem Oberstempel vorzunehmen, wenn die Aufnahme der Matrizenplatte einen geschlossenen Boden besitzt.

Zum vertikalen Bewegen der Ober- und/oder Unterstempel im Zuge des Pressvorgangs sind obere und/oder untere Antriebseinheiten vorgesehen. Grundsätzlich ist es möglich, mehr als eine, beispielsweise zwei, obere Antriebseinheiten und mehr als eine, beispielsweise zwei, untere Antriebseinheiten vorzusehen. Sind zwei obere Antriebseinheiten und/oder zwei untere Antriebseinheiten vorgesehen, können diese symmetrisch auf zwei einander gegenüberliegenden Seiten des Pressenrahmens angeordnet sein. Es ist jedoch auch denkbar, nur auf einer Seite eine Antriebseinheit vorzusehen und auf der gegenüberliegenden Seite lediglich eine Führungseinheit. Wie erläutert, kann die untere Antriebseinheit eine untere Stempelplatte oder eine Matrizenplatte in vertikaler Richtung antreiben. Es ist also ein Betrieb der Presse sowohl im Ausstoßverfahren möglich, bei der die Matrizenplatte stationär ist und die Ober- und Unterstempel gegenüber der Matrizenplatte verfahren werden, als auch im Abzugsverfahren, bei dem der Unterstempel stationär ist und die Matrizenplatte sowie der Oberstempel verfahrbar sind. Grundsätzlich lässt sich bei der erfindungsgemäßen Presse die Anzahl der Pressachsen und damit der parallel hergestellten Presslinge in weiten Grenzen erhöhen.

Der Pressenrahmen der erfindungsgemäßen Presse weist einen zwischen den Halteplatten angeordneten Tragrahmen auf. Der Tragrahmen kann beispielsweise mittig zwischen den Halteplatten angeordnet sein. Der Tragrahmen ist getrennt von der Matrizenplatte ausgebildet und dazu geeignet, große Kräfte aufzunehmen. An dem Tragrahmen ist die Werkzeugführungseinheit angeordnet. Außerdem stützen sich die obere Antriebseinheit und/oder die untere Antriebseinheit im Betrieb an dem Tragrahmen ab, insbesondere direkt und zwar derart, dass die Reaktionskräfte, die von den beim Verpressen des pulverförmigen Materials in der mindestens einen Aufnahme erzeugten Presskräften als Aktionskräften generiert werden, zumindest zum überwiegenden Teil in den Tragrahmen eingeleitet werden. Im Zuge eines Pressvorgangs üben Ober- und Unterstempel eine erhebliche durch die obere und/oder untere Antriebseinheit erzeugte Presskraft auf das zu einem Pressling zu verpressende pulverförmige Material aus. Diese Presskraft erzeugt als Aktionskraft eine Reaktions- oder Gegenkraft, die wiederum über die Ober- und Unterstempel auf die obere und/oder Antriebseinheit wirkt. Diese über die Ober- und Unterstempel in die obere und/oder untere Antriebseinheit eingeleitete Reaktionskraft wird erfindungsgemäß also in den Tragrahmen geleitet. Die übrigen Teile des Pressenrahmens, insbesondere die vertikalen Abstandhalter zwischen den Halteplatten nehmen an diesem Kraftfluss im Wesentlichen nicht teil. Auch werden diese Kräfte nicht über die obere und/oder untere Antriebseinheit wieder in die Matrizenplatte eingeleitet. Der Pressenrahmen ist insbesondere ein säulenloser Pressenrahmen, bei dem die vertikalen Abstandhalter nicht zur Aufnahme hoher Presskräfte ausgelegt sein müssen. Da der Kraftfluss im Wesentlichen nicht über die vergleichsweise langen Säulen eines Pressenrahmens erfolgt, kommt es zu einer geringeren Auffederung der Presse. Ein Verbiegen des Pressenrahmens und die damit verbundenen unerwünschten Einflüsse auf das Pressergebnis werden weitgehend vermieden. Darüber hinaus befinden sich in vorteilhafter Weise nur wenige Komponenten der Presse im Kraftfluss. Hierdurch addieren sich nur wenige Bauteiltoleranzen. Die im Kraftfluss befindlichen Komponenten, insbesondere der Tragrahmen, können in konstruktiv wenig aufwendiger Weise mit geringen Toleranzen gefertigt werden. Mit geringerem konstruktivem Aufwand als beim Stand der Technik lässt sich daher ein präzises Pressergebnis erzielen. Darüber hinaus ist die Gesamthöhe der Presse gering, da die Antriebseinheiten in den Pressenrahmen integriert werden können.

Die Werkzeugführungseinheit bildet einen sogenannten Adapter. Die Befestigung der Werkzeugführungseinheit an dem Tragrahmen erfolgt insbesondere nur über die Matrizenplatte, nämlich indem die Matrizenplatte (nur) an zwei gegenüberliegenden Seiten des Tragrahmens befestigt ist. Dadurch ist die Werkzeugführungseinheit nur mit dem Tragrahmen gekoppelt. Der Tragrahmen wiederum ist aufgrund der erfindungsgemäßen Kraftführung von einer Bewegung des Pressenrahmens weitestgehend entkoppelt, so dass auch die Werkzeugführungseinheit von einer Bewegung des Pressenrahmens entkoppelt ist.

Der Tragrahmen kann einstückig ausgebildet sein. Er umgibt die Matrizenplatte zumindest abschnittsweise, beispielsweise zumindest an drei Seiten, rahmenförmig. Das Messlineal ist in seinem thermischen Nullpunkt, d.h. in seiner Längsmitte, an dem Tragrahmen befestigt. Gleichzeitig liegt der Tragrahmen im thermischen Nullpunkt der Presse. Thermisch bedingte Längenänderungen bleiben somit ohne Auswirkung auf die Messung. Das Messlineal ist ebenfalls insbesondere nur an dem Tragrahmen befestigt. Dadurch ist auch das Messlineal über den Tragrahmen von einer Bewegung des Pressenrahmens entkoppelt. Das Messlineal hat nur über die Messschlitten eine indirekte Verbindung zu der Werkzeugführungseinheit.

Das Messlineal besitzt eine vertikale Messachse. Es ist in einer Ebene zwischen den mit der Matrizenplatte befestigten gegenüberliegenden Seiten des Tragrahmens an dem Tragrahmen befestigt. Es versteht sich, dass das Messlineal eine Querausdehnung senkrecht zu seiner Längsachse besitzt. Die insbesondere vertikale Ebene, in der das Messlineal an dem Tragrahmen befestigt ist, kann beispielsweise mittig zu der Querausdehnung des Messlineals liegen. Durch die Befestigung des Messlineals zwischen den mit der Matrizenplatte befestigten Seiten des Tragrahmens kann im Gegensatz zum Stand der Technik auch ein Verbiegen der Platten der Werkzeugführungseinheit, insbesondere der oberen und/oder unteren Stempelplatten und/oder der Matrizenplatte gemessen werden. Erfindungsgemäß können daher mit hoher Genauigkeit die vertikalen Positionen und etwaige Verformungen der oberen und/oder unteren Stempelplatten sowie der Matrizenplatte direkt gemessen werden. Fehlerfälle, wie beispielsweise Werkzeugbrüche o. ä., werden minimiert.

Grundsätzlich können die Messschlitten beispielsweise Messsensoren oder Messsendeeinrichtungen bilden. An dem Messlineal können dann entsprechende Messsendeeinrichtungen oder Messsensoren angeordnet sein. Prinzipiell sind weitgehend beliebige Messverfahren möglich. Die Messung kann beispielsweise optisch erfolgen. Dazu können das Messlineal oder die Messschlitten geeignete optische Sensoren aufweisen, die dann ein optisches Signal einer an den Messschlitten bzw. an dem Messlineal vorgesehenen optischen Sendeeinrichtung empfangen. Eine geeignete Auswerteeinrichtung wertet die gemessenen Signale aus. Es sind aber beispielsweise auch andere Messprinzipien möglich, beispielsweise können Näherungssensoren o. ä. zum Einsatz kommen.

Erfindungsgemäss ist das Messlineal in einer mittig zwischen den mit der Matrizenplatte befestigten gegenüberliegenden Seiten des Tragrahmens liegenden Ebene an dem Tragrahmen befestigt. In der Regel liegt mittig bzw. zentrisch zwischen den gegenüberliegenden Seiten des Tragrahmens die größte Verformung der Matrizenplatte bzw. der oberen und/oder unteren Stempelplatten vor. Indem dort gemessen wird, wird eine besonders hohe Genauigkeit erreicht. Nach einer weiteren Ausgestaltung kann der Tragrahmen eine U-Form besitzen, die in einer horizontalen Ebene liegt, wobei die Matrizenplatte an den einander gegenüberliegenden freien Schenkeln des Tragrahmens befestigt ist, und wobei das Messlineal an dem die freien Schenkeln verbindenden Abschnitt des Tragrahmens befestigt ist, insbesondere mittig. Die freien Schenkel können parallel zueinander verlaufen und durch einen rechtwinklig zu den freien Schenkeln verlaufenden Abschnitt miteinander verbunden sein. Die Matrizenplatte kann in der Draufsicht rechteckig, insbesondere quadratisch, sein.

Nach einer weiteren Ausgestaltung können die Matrizenplatte und der Tragrahmen in derselben oder einer geringfügig voneinander beabstandeten Anordnungsebene angeordnet sein. Bei der Anordnungsebene handelt es sich insbesondere um eine horizontale Ebene. Sowohl die Matrizenplatte als auch der Tragrahmen weisen in der Regel eine Ausdehnung in einer Richtung senkrecht zu der Anordnungsebene, insbesondere einer vertikalen Richtung, auf. Die Anordnungsebene kann dann beispielsweise mittig zu der vertikalen Ausdehnung der Matrizenplatte bzw. des Tragrahmens liegen. Die Anordnungsebene der Matrizenplatte bildet eine Referenzebene, in der bei dieser Ausgestaltung sowohl die Befestigung der Matrizenplatte als auch die Befestigung des Messlineals an dem Tragrahmen erfolgt.

Nach einer weiteren besonders praxisgemäßen Ausgestaltung kann die Werkzeugführungseinheit ein Modul bilden, welches als Ganzes aus der Presse entnommen und gegen eine andere ebenfalls ein Modul bildende Werkzeugführungseinheit ausgetauscht werden kann.

Nach einer weiteren Ausgestaltung kann vorgesehen sein, dass die obere Antriebseinheit zwischen dem Tragrahmen und der oberen Stempelplatte angeordnet ist und/oder dass die untere Antriebseinheit zwischen dem Tragrahmen und der unteren Stempelplatte oder der Matrizenplatte angeordnet ist, wobei die obere Antriebseinheit direkt oder über ein oberes Kraftübertragungselement an der oberen Stempelplatte befestigt ist und/oder wobei die untere Antriebseinheit direkt oder über ein unteres Kraftübertragungselement an der unteren Stempelplatte oder der Matrizenplatte befestigt ist. Weiterhin kann vorgesehen sein, dass das obere Kraftübertragungselement eine obere Kraftübertragungsbrücke umfasst, wobei zwei obere Antriebseinheiten vorgesehen sind, die an der oberen Kraftübertragungsbrücke befestigt sind und/oder dass das untere Kraftübertragungselement eine untere Kraftübertragungsbrücke umfasst, wobei zwei untere Antriebseinheiten vorgesehen sind, die an der unteren Kraftübertragungsbrücke befestigt sind.

Nach einer weiteren Ausgestaltung kann die obere Antriebseinheit mindestens einen durch mindestens einen elektrischen Motor angetriebenen oberen Spindeltrieb umfassen und/oder kann die untere Antriebseinheit mindestens einen durch mindestens einen elektrischen Motor angetriebenen unteren Spindeltrieb umfassen. Mindestens ein elektrischer Motor des oberen Spindeltriebs kann an der oberen Halteplatte des Pressenrahmens befestigt sein und/oder mindestens ein elektrischer Motor des unteren Spindeltriebs kann an der unteren Halteplatte des Pressenrahmens befestigt sein. Weiterhin kann vorgesehen sein, dass ein oberes Festlager einer oberen Spindel mindestens eines oberen Spindeltriebs an dem Tragrahmen befestigt ist und eine obere Spindelmutter des mindestens einen oberen Spindeltriebs direkt oder über ein oberes Kraftübertragungselement an der oberen Stempelplatte befestigt ist und/oder dass ein unteres Festlager einer unteren Spindel mindestens eines unteren Spindeltriebs an dem Tragrahmen befestigt ist und eine untere Spindelmutter des mindestens einen unteren Spindeltriebs direkt oder über ein unteres Kraftübertragungselement an der unteren Stempelplatte und/oder der Matrizenplatte befestigt ist. Der mindestens eine elektrische Motor kann ein Hohlwellenmotor sein.

Es kann weiter vorgesehen sein, dass der elektrische Motor an dem Tragrahmen befestigt ist, wobei der elektrische Motor eine obere Spindelmutter des mindestens einen oberen Spindeltriebs antreibt, wobei eine obere Spindel des mindestens einen oberen Spindeltriebs direkt oder über ein oberes Kraftübertragungselement an der oberen Stempelplatte befestigt ist. Auch kann vorgesehen sein, dass der elektrische Motor eine untere Spindelmutter des mindestens einen unteren Spindeltriebs antreibt, wobei eine untere Spindel des mindestens einen unteren Spindeltriebs direkt oder über ein unteres Kraftübertragungselement an der unteren Stempelplatte und/oder der Matrizenplatte befestigt ist.

Alternativ kann vorgesehen sein, dass der elektrische Motor direkt oder über ein oberes Kraftübertragungselement an der oberen Stempelplatte befestigt ist und eine obere Spindelmutter des mindestens einen oberen Spindeltriebs antreibt, und dass eine obere Spindel des mindestens einen oberen Spindeltriebs an dem Tragrahmen befestigt ist. Auch kann vorgesehen sein, dass der elektrische Motor direkt oder über ein unteres Kraftübertragungselement an der unteren Stempelplatte und/oder der Matrizenplatte befestigt ist und eine untere Spindelmutter des mindestens einen unteren Spindeltriebs antreibt, wobei eine untere Spindel des mindestens einen unteren Spindeltriebs an dem Tragrahmen befestigt ist.

Weiter alternativ kann vorgesehen sein, dass der elektrische Motor an dem Tragrahmen befestigt ist und, dass der elektrische Motor eine axial bewegliche obere Spindel des mindestens einen oberen Spindeltriebs rotativ antreibt, und dass ein oberes Festlager des mindestens einen oberen Spindeltriebs direkt oder über ein oberes Kraftübertragungselement an der oberen Stempelplatte befestigt ist und/oder dass der elektrische Motor eine axial bewegliche untere Spindel des mindestens einen unteren Spindeltriebs rotativ antreibt, und dass ein unteres Festlager des mindestens einen unteren Spindeltriebs direkt oder über ein unteres Kraftübertragungselement an der unteren Stempelplatte und/oder der Matrizenplatte befestigt ist.

Auch kann vorgesehen sein, dass der elektrische Motor direkt oder über ein oberes Kraftübertragungselement an der oberen Stempelplatte befestigt ist und eine axial bewegliche obere Spindel des mindestens einen oberen Spindeltriebs rotativ antreibt, und dass ein oberes Festlager des mindestens einen oberen Spindeltriebs an dem Tragrahmen befestigt ist und/oder dass der elektrische Motor direkt oder über ein unteres Kraftübertragungselement an der unteren Stempelplatte und/oder der Matrizenplatte befestigt ist und eine axial bewegliche untere Spindel des mindestens einen unteren Spindeltriebs rotativ antreibt, und dass ein unteres Festlager des mindestens einen unteren Spindeltriebs an dem Tragrahmen befestigt ist.

Grundsätzlich ist es natürlich auch möglich, dass die obere Antriebseinheit mindestens einen oberen hydraulischen oder elektrohydraulischen Antrieb umfasst und/oder dass die untere Antriebseinheit mindestens einen unteren hydraulischen oder elektrohydraulischen Antrieb umfasst.

Ein Ausführungsbeispiel der Erfindung wird nachfolgend anhand von Figuren näher erläutert. Es zeigen schematisch:

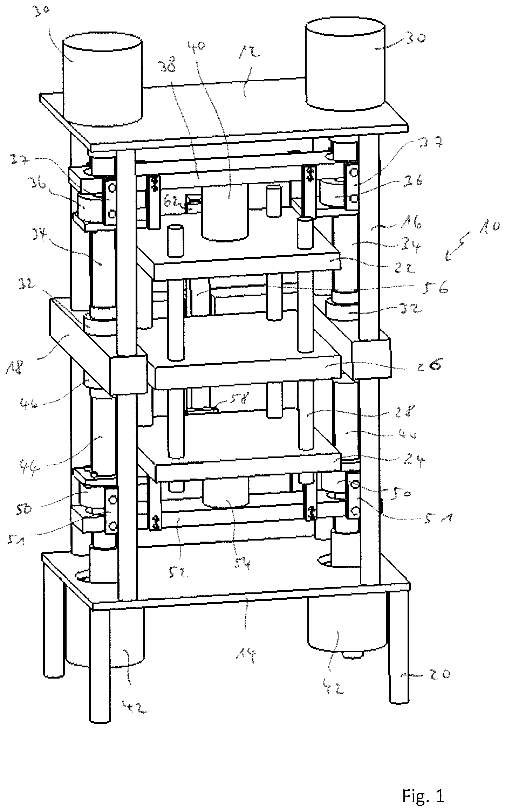

- Fig. 1: eine erfindungsgemäße Presse im Ruhezustand in einer perspektivischen Ansicht von vorne,

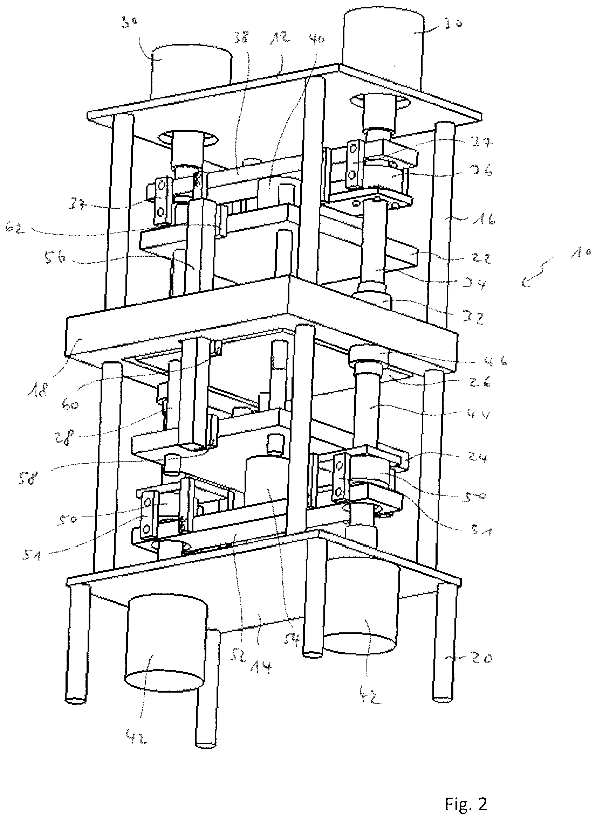

- Fig. 2: die Presse aus Fig. 1 in einer perspektivischen Ansicht von hinten,
- Fig. 3: die Ansicht aus Fig. 1 in einem Betriebszustand der Presse, und
- Fig. 4: die Ansicht aus Fig. 2 in einem Betriebszustand der Presse.

Soweit nichts anderes angegeben ist, bezeichnen in den Figuren gleiche Bezugszeichen gleiche Gegenstände. Die erfindungsgemäße Presse besitzt einen Pressenrahmen 10 mit einer oberen Halteplatte 12 und einer unteren Halteplatte 14. Über in dem gezeigten Beispiel vier in vertikaler Richtung verlaufende Abstandhalter 16 sind die oberen und unteren Halteplatten 12, 14 miteinander und mit einem zwischen der oberen und unteren Halteplatte 12, 14 etwa mittig angeordneten Tragrahmen 18 verbunden. Der Tragrahmen 18 ist in dem gezeigten Beispiel einstückig ausgebildet und besitzt ein in einer horizontalen Ebene, einer Anordnungs- und Erstreckungsebene, liegendes U-Profil. Insbesondere besitzt der Tragrahmen 18 zwei parallel zueinander angeordnete freie Schenkel und einen die freien Schenkel einenends miteinander verbindenden Abschnitt, dessen Längsachse rechtwinklig zu den Längsachsen der freien Schenkel verläuft. Die untere Halteplatte 14 steht über vier Stützbeine 20 auf dem Untergrund auf. Die Presse besitzt darüber hinaus eine als Modul ausgebildete Werkzeugführungseinheit mit einer oberen Stempelplatte 22 mit einem nicht gezeigten Oberstempel, einer unteren Stempelplatte 24 mit einem ebenfalls nicht gezeigten Unterstempel sowie einer zwischen der oberen Stempelplatte 22 und der unteren Stempelplatte 24 angeordneten Matrizenplatte 26 mit einer nicht gezeigten Aufnahme für durch die Ober- und Unterstempel zu verpressendes Pulver, beispielsweise Metall- oder Keramikpulver. Die obere Stempelplatte 22, die untere Stempelplatte 24 und die Matrizenplatte 26 sind im gezeigten Beispiel über vier vertikale Führungssäulen 28 miteinander verbunden. Die Matrizenplatte 26 ist in dem gezeigten Beispiel an den einander gegenüberliegenden Innenseiten der freien Schenkel des Tragrahmens 18 direkt befestigt. Die Werkzeugführungseinheit ist als Ganzes aus dem Pressenrahmen 10 entnehmbar und gegen eine andere Werkzeugführungseinheit austauschbar.

Die Presse umfasst darüber hinaus zwei obere Antriebseinheiten zum vertikalen Verfahren der oberen Stempelplatte 22 und zwei untere Antriebseinheiten zum vertikalen Verfahren der unteren Stempelplatte 24. Die oberen und unteren Antriebseinheiten sind jeweils auf zwei gegenüberliegenden Seiten des Pressenrahmens 10 angeordnet. Die oberen Antriebseinheiten umfassen jeweils einen auf der oberen Halteplatte 12 angeordneten oberen elektrischen Motor 30 und einen oberen Spindeltrieb. In dem gezeigten Beispiel ist ein oberes Festlager 32 der oberen Spindeltriebe jeweils direkt an der Oberseite des Tragrahmens 18 befestigt. Auf den oberen Spindeln 34 ist jeweils eine obere Spindelmutter 36 axial beweglich angeordnet. Bei einer Drehung der oberen Spindeln 34 kommt es zu einer axialen Bewegung der jeweiligen oberen Spindelmutter 36. Die oberen Spindelmuttern 36 der oberen Antriebseinheiten sind an einer oberen Kraftübertragungsbrücke 38 befestigt, die über ein oberes Kraftübertragungselement 40 mit der oberen Stempelplatte 22 verbunden ist. Auf diese Weise wird eine axiale Bewegung der oberen Spindelmuttern 36 auf die obere Stempelplatte 22 übertragen, so dass diese ebenfalls in axialer Richtung bewegt wird.

Der Aufbau der beiden unteren Antriebseinheiten ist insoweit identisch. So weisen die unteren Antriebseinheiten jeweils einen an der unteren Halteplatte 14 angeordneten unteren elektrischen Motor 42 auf, der jeweils eine axial feststehende untere Spindel 44 antreibt, wobei jeweils ein unteres Festlager 46 der unteren Spindeltriebe an der Unterseite des Tragrahmens 18 direkt befestigt ist. Auch eine Befestigung an der Oberseite ist wiederum möglich. Wiederum ist auf den unteren Spindeln 44 jeweils eine untere Spindelmutter 50 angeordnet. Die unteren Spindelmuttern 50 sind wiederum mit einer unteren Kraftübertragungsbrücke 52 verbunden, die über ein unteres Kraftübertragungselement 54 mit der unteren Stempelplatte 24 verbunden ist. Treiben die unteren elektrischen Motoren 42 die unteren Spindeln 44 drehend an, kommt es wiederum zu einer axialen Bewegung der unteren Spindelmuttern 50, die über die untere Kraftübertragungsbrücke 52 und das untere Kraftübertragungselement 54 auf die untere Stempelplatte 24 übertragen wird, so dass diese ebenfalls in axialer Richtung bewegt wird. Ergänzend sei noch darauf hingewiesen, dass die oberen Spindelmuttern 36 und die unteren Spindelmuttern 50 jeweils über drehbar gelagerte Ausgleichselemente 37, 51 mit der oberen bzw. unteren Kraftübertragungsbrücke 38, 52 verbunden sind. Die Ausgleichselemente 37, 51 sorgen dafür, dass eine im Betrieb unter hohen Presskräften auftretende Verformung der Kraftübertragungsbrücken 38, 52 nicht auf die Spindeltriebe übertragen wird.

Wie in den Figuren erkennbar, stützen sich die oberen Antriebseinheiten über ihre oberen Festlager 32 und die unteren Antriebseinheiten über ihre unteren Festlager 46 jeweils direkt an dem Tragrahmen 18 ab. Bei einem Pressvorgang erfolgt also ein Kraftfluss zwischen dem Oberstempel in die obere Stempelplatte 22, von dieser über das obere Kraftübertragungselement 40 und die obere Kraftübertragungsbrücke 38 in die beiden oberen Antriebseinheiten, insbesondere die oberen Spindeln 34 und die oberen Festlager 32 und von diesen in den Tragrahmen 18. Entsprechend erfolgt ein Kraftfluss von dem Unterstempel in die untere Stempelplatte 24 und über das untere Kraftübertragungselement 54 und die untere Kraftübertragungsbrücke 52 in die unteren Antriebseinheiten, insbesondere die unteren Spindeln 44 und die unteren Festlager 46 und von diesen wiederum in den Tragrahmen 18. Es befinden sich somit nur wenige Komponenten im Kraftfluss, so dass sich auch entsprechend wenige Bauteiltoleranzen aufaddieren. Da die Anordnungsebene des Tragrahmens 18 in derselben horizontalen Ebene liegt wie die Matrizenplatte 26 oder in einer von dieser nur geringfügig beabstandeten Ebene und die vertikalen Abstandhalter 16 an dem Kraftfluss im Wesentlichen nicht teilnehmen, kommt es nur zu einem minimalen Auffedern und damit Verbiegen des Pressenrahmens 10. Soweit es dennoch zu Verformungen des Pressenrahmens 10 kommt, führen diese jedenfalls nicht zu einer Verformung des Tragrahmens 18, der insoweit von Verformungen des Pressenrahmens 10 entkoppelt ist. Aufgrund der ausschließlichen Befestigung der Werkzeugführungseinheit über die Matrizenplatte 26 an dem Tragrahmen 18 ist auch die Werkzeugführungseinheit von einer etwaigen Verformung des Pressenrahmens 10 entkoppelt.

In dem dargestellten Beispiel ist mittig an dem die freien Schenkel des Tragrahmens 18 verbindenden Abschnitt ein Messlineal 56 mit vertikaler Messachse befestigt, und zwar in seiner Längsmitte, also in seinem thermischen Nullpunkt. Das Messlineal 56 ist ausschließlich an dem Tragrahmen 18 befestigt, so dass auch dieses von einer etwaigen Verformung des Pressenrahmens 10 im Zuge eines Pressvorgangs entkoppelt ist. An der oberen Stempelplatte 22, der unteren Stempelplatte 24 und der Matrizenplatte 26 ist jeweils ein Messschlitten 58, 60, 62 angebracht. Die Messschlitten 58, 60, 62 wirken derart mit dem Messlineal 56 zusammen, dass sowohl ein vertikales Bewegen, also die vertikale Position, als auch eine etwaige Verformung, beispielsweise ein Verbiegen, der oberen Stempelplatte 22, der unteren Stempelplatte 24 und der Matrizenplatte 26 gemessen werden können. Hierzu können weitgehend beliebige und an sich bekannte Messeinrichtungen zum Einsatz kommen, beispielsweise optische Sensoren, Näherungssensoren oder dergleichen.

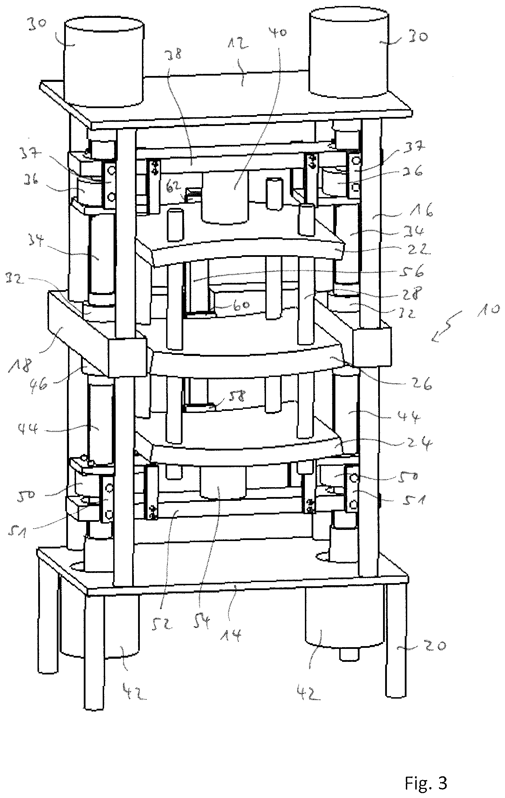

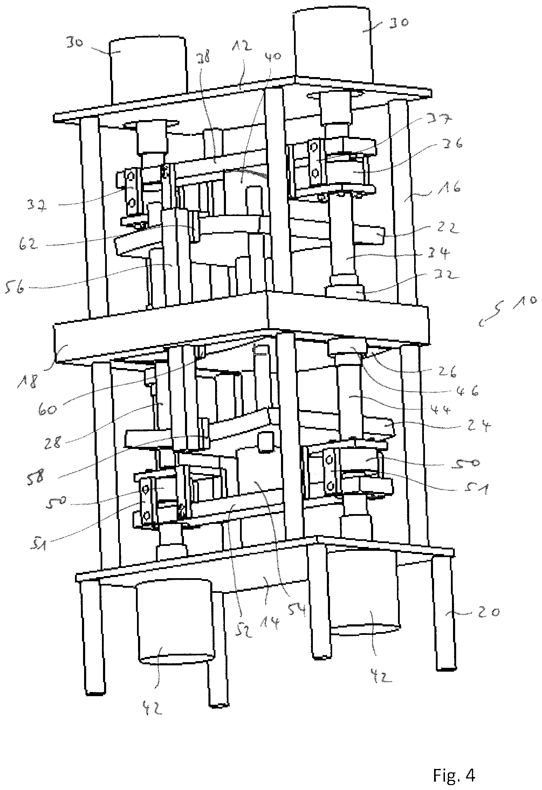

In den Fig. 3 und 4 ist zur Veranschaulichung stark übertrieben ein im Zuge eines Pressvorgangs aufgrund der hohen Presskräfte auftretendes Verbiegen der oberen und unteren Stempelplatten 22, 24 sowie der Matrizenplatte 26 dargestellt. Aufgrund der mittigen Anordnung des Messlineals 56 wird im Ort des größten Verbiegens gemessen. Da darüber hinaus das Messlineal 56 in seinem thermischen Nullpunkt an dem Tragrahmen 18 befestigt ist und weiterhin der Tragrahmen 18 und somit auch die Matrizenplatte 26 in dem thermischen Nullpunkt der Presse angeordnet sind, bleiben auch thermische Einflüsse ohne Wirkung auf die durchgeführte Messung.

## Patentansprüche

1. Presse zur Herstellung eines Presslings aus pulverförmigem Material, umfassend
- einen Pressenrahmen (10) mit einer oberen und einer unteren Halteplatte (12, 14), die durch mehrere vertikale Abstandhalter (16) miteinander verbunden sind und mit mindestens einem zwischen der oberen und unteren Halteplatte (12, 14) angeordneten Tragrahmen (18),
- eine Werkzeugführungseinheit mit mindestens einer oberen Stempelplatte (22) mit mindestens einem oberen Pressstempel und/oder mit mindestens einer unteren Stempelplatte (24) mit mindestens einem unteren Pressstempel und mit einer Matrizenplatte (26) mit mindestens einer Aufnahme für durch den oberen und/oder unteren Pressstempel zu verpressendes pulverförmiges Material,
- mindestens eine obere Antriebseinheit zum Verfahren der oberen Stempelplatte (22) in vertikaler Richtung und/oder mindestens eine untere Antriebseinheit zum Verfahren der unteren Stempelplatte (24) in vertikaler Richtung,
- wobei die obere Antriebseinheit und/oder die untere Antriebseinheit sich im Betrieb derart an dem Tragrahmen (18) abstützen, dass die Reaktionskräfte, die von den beim Verpressen des pulverförmigen Materials in der mindestens einen Aufnahme erzeugten Presskräften als Aktionskräfte generiert werden, in den Tragrahmen (18) eingeleitet werden,
- wobei der Tragrahmen (18) die Matrizenplatte (26) der Werkzeugführungseinheit zumindest abschnittsweise rahmenförmig umgibt und die Matrizenplatte (26) an einander gegenüberliegenden Seiten des Tragrahmens (18) befestigt ist,
- **dadurch gekennzeichnet, dass** ein Messlineal (56) in seinem thermischen Nullpunkt und in einer Ebene zwischen den mit der Matrizenplatte (26) befestigten gegenüberliegenden Seiten des Tragrahmens (18) an dem Tragrahmen (18) befestigt ist, und
- **dadurch gekennzeichnet, dass** an der oberen Stempelplatte (22) und/oder an der unteren Stempelplatte (24) und an der Matrizenplatte (26) jeweils ein Messschlitten (58, 60, 62) angeordnet ist, wobei die Messschlitten (58, 60, 62) derart mit dem Messlineal (56) zusammenwirken, dass ein vertikales Bewegen und ein Verbiegen der oberen Stempelplatte (22) und/oder der unteren Stempelplatte (24) und/oder der Matrizenplatte (26) gemessen werden kann,
- das Messlineal (56) in einer mittig zwischen den mit der Matrizenplatte (26) befestigten gegenüberliegenden Seiten des Tragrahmens (18) liegenden Ebene an dem Tragrahmen (18) befestigt ist.

2. Presse nach einem der vorhergehenden Ansprüche, **dadurch gekennzeichnet, dass** der Tragrahmen (18) eine U-Form besitzt, die in einer horizontalen Ebene liegt, wobei die Matrizenplatte (26) an den einander gegenüberliegenden freien Schenkeln des Tragrahmens (18) befestigt ist, und wobei das Messlineal (56) an dem die freien Schenkel verbindenden Abschnitt des Tragrahmens (18) befestigt ist.

3. Presse nach einem der vorhergehenden Ansprüche, **dadurch gekennzeichnet, dass** die Matrizenplatte (26) und der Tragrahmen (18) in derselben oder einer geringfügig voneinander beabstandeten Anordnungsebene angeordnet sind.

4. Presse nach einem der vorhergehenden Ansprüche, **dadurch gekennzeichnet, dass** die Werkzeugführungseinheit ein Modul bildet, welches als Ganzes aus der Presse entnommen und gegen eine andere ebenfalls ein Modul bildende Werkzeugführungseinheit ausgetauscht werden kann.

5. Presse nach einem der vorhergehenden Ansprüche, **dadurch gekennzeichnet, dass** die obere Antriebseinheit zwischen dem Tragrahmen (18) und der oberen Stempelplatte (22) angeordnet ist und/oder dass die untere Antriebseinheit zwischen dem Tragrahmen (18) und der unteren Stempelplatte (24) oder der Matrizenplatte (26) angeordnet ist, wobei die obere Antriebseinheit direkt oder über ein oberes Kraftübertragungselement (38, 40) an der oberen Stempelplatte (22) befestigt ist und/oder dass die untere Antriebseinheit direkt oder über ein unteres Kraftübertragungselement (52, 54) an der unteren Stempelplatte (24) oder der Matrizenplatte (26) befestigt ist.

6. Presse nach Anspruch 5, **dadurch gekennzeichnet, dass** das obere Kraftübertragungselement eine obere Kraftübertragungsbrücke (38) umfasst, wobei zwei obere Antriebseinheiten vorgesehen sind, die an der oberen Kraftübertragungsbrücke (38) befestigt sind und/oder dass das untere Kraftübertragungselement eine untere Kraftübertragungsbrücke (52) umfasst, wobei zwei untere Antriebseinheiten vorgesehen sind, die an der unteren Kraftübertragungsbrücke (52) befestigt sind.

7. Presse nach einem der vorhergehenden Ansprüche, **dadurch gekennzeichnet, dass** die obere Antriebseinheit mindestens einen durch mindestens einen elektrischen Motor (30) angetriebenen oberen Spindeltrieb umfasst und/oder dass die untere Antriebseinheit mindestens einen durch mindestens einen elektrischen Motor (42) angetriebenen unteren Spindeltrieb umfasst.

8. Presse nach Anspruch 7, **dadurch gekennzeichnet, dass** mindestens ein elektrischer Motor (30) des oberen Spindeltriebs an der oberen Halteplatte (12) des Pressenrahmens (10) befestigt ist und/oder dass mindestens ein elektrischer Motor (42) des unteren Spindeltriebs an der unteren Halteplatte (14) des Pressenrahmens (10) befestigt ist.

9. Presse nach einem der Ansprüche 7 oder 8, **dadurch gekennzeichnet, dass** ein oberes Festlager (32) einer oberen Spindel (34) mindestens eines oberen Spindeltriebs an dem Tragrahmen (18) befestigt ist und eine obere Spindelmutter (36) des mindestens einen oberen Spindeltriebs direkt oder über ein oberes Kraftübertragungselement (38, 40) an der oberen Stempelplatte (22) befestigt ist und/oder dass ein unteres Festlager (46) einer unteren Spindel (44) mindestens eines unteren Spindeltriebs an dem Tragrahmen (18) befestigt ist und eine untere Spindelmutter (50) des mindestens einen unteren Spindeltriebs direkt oder über ein unteres Kraftübertragungselement (52, 54) an der unteren Stempelplatte (24) und/oder der Matrizenplatte (26) befestigt ist.

## Claims

1. A press for producing a pellet made of powdered material comprising
- a press frame (10) with an upper and a lower holding plate (12, 14), which are connected with one another by several vertical spacers (16) and with at least one support frame (18) arranged between the upper and lower holding plate (12, 14),
- a tool guiding unit with at least one upper stamp plate (22) with at least one upper press punch and/or with at least one lower stamp plate (24) with at least one lower press punch and with a die plate (26) with at least one intake for powdered material to be pressed by the upper and/or lower press punch,
- at least one upper drive unit for moving the upper stamp plate (22) in the vertical direction and/or at least one lower drive unit for moving the lower stamp plate (24) in the vertical direction,
- wherein the upper drive unit and/or the lower drive unit are supported on the support frame (18) during operation such that the reactive forces, which are generated as thrust forces by the pressing forces generated during the pressing of the powdered material in the at least one intake, are fed into the support frame (18),
- wherein the support frame (18) surrounds the die plate (26) of the tool guiding unit at least in sections in the form of a frame and the die plate (26) is fastened on opposite-lying sides of the support frame (18),
- **characterized in that** a ruler (56) is fastened on the support frame (18) in its thermal zero point and in a plane between the opposite-lying sides of the support frame (18) fastened with the die plate (26),
- **characterized in that** a measuring slide (58, 60, 62) is arranged respectively on the upper stamp plate (22) and/or on the lower stamp plate (24) and on the die plate (26), wherein the measuring slides (58, 60, 62) work together with the ruler (56) such that a vertical movement and a bending of the upper stamp plate (22) and/or of the lower stamp plate (24) and/or of the die plate (26) can be measured,
- the ruler (56) is fastened on the support frame (18) in a plane lying centered between the opposite-lying sides of the support frame (18) fastened with the die plate (26).

2. The press according to one of the previous claims, **characterized in that** the support frame (18) has a U shape, which lies in a horizontal plane, wherein the die plate (26) is fastened on the opposite-lying free legs of the support frame (18), and wherein the ruler (56) is fastened to the section of the support frame (18) connecting the free legs.

3. The press according to one of the previous claims, **characterized in that** the die plate (26) and the support frame (18) are arranged in the same or in a slightly separated arrangement plane.

4. The press according to one of the previous claims, **characterized in that** the tool guiding unit forms a module, which can be removed in its entirety from the press and can be replaced with another tool guiding unit also forming a module.

5. The press according to one of the previous claims, **characterized in that** upper drive unit is arranged between the support frame (18) and the upper stamp plate (22) and/or **in that** the lower drive unit is arranged between the support frame (18) and the lower stamp plate (24) or the die plate (26), wherein the upper drive unit is fastened directly or via an upper power transmission element (38, 40) to the upper stamp plate (22) and/or **in that** the lower drive unit is fastened directly or via a lower power transmission element (52, 54) to the lower stamp plate (24) or the die plate (26).

6. The press according to claim 5, **characterized in that** the upper power transmission element comprises an upper power transmission bridge (38), wherein two upper drive units are provided, which are fastened on the upper power transmission bridge (38) and/or **in that** the lower power transmission element comprises a lower power transmission bridge (52), wherein two lower drive units are provided, which are fastened on the lower power transmission bridge (52).

7. The press according to one of the previous claims, **characterized in that** the upper drive unit comprises at least one upper spindle drive driven by at least one electric motor (30) and/or **in that** the lower drive unit comprises at least one lower spindle drive driven by at least one electric motor (42).

8. The press according to claim 7, **characterized in that** at least one electric motor (30) of the upper spindle drive is fastened on the upper holding plate (12) of the press frame (10) and/or **in that** at least one electric motor (42) of the lower spindle drive is fastened on the lower holding plate (14) of the press frame (10).

9. The press according to one of claims 7 or 8, **characterized in that** an upper fixed bearing (32) of an upper spindle (34) of at least one upper spindle drive is fastened on the support frame (18) and an upper spindle nut (36) of the at least one upper spindle drive is fastened directly or via an upper power transmission element (38, 40) to the upper stamp plate (22) and/or **in that** a lower fixed bearing (46) of a lower spindle (44) of at least one lower spindle drive is fastened to the support frame (18) and a lower spindle nut (50) of the at least one lower spindle drive is fastened directly or via a lower power transmission element (52, 54) to the lower stamp plate (24) and/or the die plate (26).

## Revendications

1. Presse pour la fabrication d'une pièce pressée en matériau pulvérulent, comprenant
- un châssis de presse (10) avec une plaque de maintien supérieure et inférieure (12, 14) qui sont connectées l'une à l'autre par plusieurs écarteurs verticaux (16) et avec au moins un cadre porteur (18) disposé entre la plaque de maintien supérieure et inférieure (12, 14),
- une unité de guidage d'outil avec au moins une plaque de poinçon supérieure (22) avec au moins un poinçon de presse supérieur et/ou avec au moins une plaque de poinçon inférieure (24) avec au moins un poinçon de presse inférieur et avec une plaque de matrice (26) avec au moins un logement pour du matériau pulvérulent à presser par le poinçon de presse supérieur et/ou inférieur,
- au moins un module d'entraînement supérieur pour le déplacement de la plaque de poinçon supérieure (22) en direction verticale et/ou au moins un module d'entraînement inférieur pour le déplacement de la plaque de poinçon inférieure (24) en direction verticale,
- dans laquelle le module d'entraînement supérieur et/ou le module d'entraînement inférieur s'appuient en service sur le cadre porteur (18) de telle sorte que les forces de réaction qui sont générées par les forces de pression générées lors du pressage du matériau pulvérulent dans l'au moins un logement en tant que forces d'action sont introduites dans le cadre porteur (18),
- dans laquelle le cadre porteur (18) entoure au moins par section en forme de cadre la plaque de matrice (26) de l'unité de guidage d'outil et la plaque de matrice (26) est fixée à des côtés opposés du cadre porteur (18),
- **caractérisée en ce qu'**une règle de mesure (56) est fixée au cadre porteur (18) dans sa position zéro thermique et dans un plan entre les côtés opposés du cadre porteur (18) fixés à la plaque de matrice (26), et
- **caractérisée en ce qu'**un chariot de mesure (58, 60, 62) est à chaque fois disposé sur la plaque de poinçon supérieure (22) et/ou sur la plaque de poinçon inférieure (24) et sur la plaque de matrice (26), dans laquelle les chariots de mesure (58, 60, 62) coopèrent avec la règle de mesure (56) de telle sorte qu'un mouvement vertical et une torsion de la plaque de poinçon supérieure (22) et/ou de la plaque de poinçon inférieure (24) et/ou de la plaque de matrice (26) peuvent être mesurés,
- la règle de mesure (56) est fixée au cadre porteur (18) dans un plan situé au milieu entre les côtés opposés du cadre porteur (18) fixés à la plaque de matrice (26).

2. Presse selon une des revendications précédentes, **caractérisée en ce que** le cadre porteur (18) possède une forme en U qui se situe dans un plan horizontal, dans laquelle la plaque de matrice (26) est fixée aux branches libres opposées du cadre porteur (18), et dans laquelle la règle de mesure (56) est fixée à la section du cadre porteur (18) connectant les branches libres.

3. Presse selon une des revendications précédentes, **caractérisée en ce que** la plaque de matrice (26) et le cadre porteur (18) sont disposés dans le même plan d'agencement ou un plan d'agencement légèrement écarté l'un de l'autre.

4. Presse selon une des revendications précédentes, **caractérisée en ce que** l'unité de guidage d'outil forme un module qui peut être retiré en entier de la presse et remplacé par une autre unité de guidage d'outil formant également un module.

5. Presse selon une des revendications précédentes, **caractérisée en ce que** le module d'entraînement supérieur est disposé entre le cadre porteur (18) et la plaque de poinçon supérieure (22) et/ou que le module d'entraînement inférieur est disposé entre le cadre porteur (18) et la plaque de poinçon inférieure (24) ou la plaque de matrice (26), dans laquelle le module d'entraînement supérieur est fixé à la plaque de poinçon supérieure (22) directement ou par le biais d'un élément de transmission de force supérieur (38, 40) et/ou que le module d'entraînement inférieur est fixé à la plaque de poinçon inférieure (24) ou la plaque de matrice (26) directement ou par le biais d'un élément de transmission de force inférieur (52, 54).

6. Presse selon la revendication 5, **caractérisée en ce que** l'élément de transmission de force supérieur comprend un pont de transmission de force supérieur (38), dans laquelle deux modules d'entraînement supérieurs sont prévus, lesquels sont fixés au pont de transmission de force supérieur (38) et/ou que l'élément de transmission de force inférieur comprend un pont de transmission de force inférieur (52), dans laquelle deux modules d'entraînement inférieurs sont prévus, lesquels sont fixés au pont de transmission de force inférieur (52).

7. Presse selon une des revendications précédentes, **caractérisée en ce que** le module d'entraînement supérieur comprend au moins un mécanisme à broche supérieur entraîné par au moins un moteur électrique (30) et/ou que le module d'entraînement inférieur comprend au moins un mécanisme à broche inférieur entraîné par au moins un moteur électrique (42).

8. Presse selon la revendication 7, **caractérisée en ce qu'**au moins un moteur électrique (30) du mécanisme à broche supérieur est fixé à la plaque de maintien supérieure (12) du châssis de presse (10) et/ou qu'au moins un moteur électrique (42) du mécanisme à broche inférieur est fixé à la plaque de maintien inférieure (14) du châssis de presse (10).

9. Presse selon une des revendications 7 ou 8, **caractérisée en ce qu'**un palier fixe supérieur (32) d'une broche supérieure (34) d'au moins un mécanisme à broche supérieur est fixé au cadre porteur (18) et un écrou à broche supérieur (36) de l'au moins un mécanisme à broche supérieur est fixé à la plaque de poinçon supérieure (22) directement ou par le biais d'un élément de transmission de force supérieur (38, 40) et/ou qu'un palier fixe inférieur (46) d'une broche inférieure (44) d'au moins un mécanisme à broche inférieur est fixé au cadre porteur (18) et un écrou à broche inférieur (50) de l'au moins un mécanisme à broche inférieur est fixé à la plaque de poinçon inférieure (24) et/ou la plaque de matrice (26) directement ou par le biais d'un élément de transmission de force inférieur (52, 54).
